# EUROPEAN PATENT SPECIFICATION

(11) **EP 1 551 142 B1**
(45) Date of publication and mention of the grant of the patent: **10.10.2007**
(21) Application number: 04290019.1
(22) Date of filing: 05.01.2004
(51) Int. Cl.: H04L 12/56

(54) **A gateway for coupling of passive and active networks**
Gateway zum Verbinden eines passiven und aktiven Netzes
Gateway pour brancher un reseau passif et un reseau actif

(43) Date of publication of application: 06.07.2005
(73) Proprietor: Alcatel Lucent, 75008 Paris (FR)
(72) Inventor: Marcé, Olivier, 91300 Massy (FR)
(74) Representative: Narmon, Gisèle Marie Thérèse

(56) References cited:
- EP-A- 1 001 582
- WO-A-00/62496
- CHAN H C B ET AL: "ISDN3: the next generation networks" 2001 IEEE PACIFIC RIM CONFERENCE ON COMMUNICATIONS, COMPUTERS AND SIGNAL PROCESSING. VICTORIA, BC, CANADA, AUG. 26 - 28, 2001, IEEE PACIFIC RIM CONFERENCE ON COMMUNICATIONS, COMPUTERS AND SIGNAL PROCESSING. PACRIM, NEW YORK, NY : IEEE, US, vol. VOL. 1 OF 2. CONF. 8, 26 August 2001 (2001-08-26), pages 607-610, XP010560426 ISBN: 0-7803-7080-5
- NICULESCU DRAGOS: "Survey of Active Network Research" INTERNET ARTICLE, [Online] 14 July 1999 (1999-07-14), XP002289536 Retrieved from the Internet: URL:paul.rutgers.edu/~dnicul.PDF> [retrieved on 2004-07-22]

## Description

### Field of the invention.

The present invention relates to the field of communication networks, and more particularly without limitation, to internet protocol (IP) networks.

### Background and prior art

In a passive network the transmission of data packets is controlled by means of a protocol such as the resource reservation protocol (RSVP). RSVP is a resource reservation set up protocol designed for an integrated services internet. The RSVP protocol is used by a host to request specific qualities of service from the network for particular application data streams or flows.

RSVP is also used by routers to deliver quality-of-service (QoS) requests to all nodes along the path of the flows and to establish a maintained state to provide the requested service. RSVP requests will generally result in resources being reserved in each node along the data path.

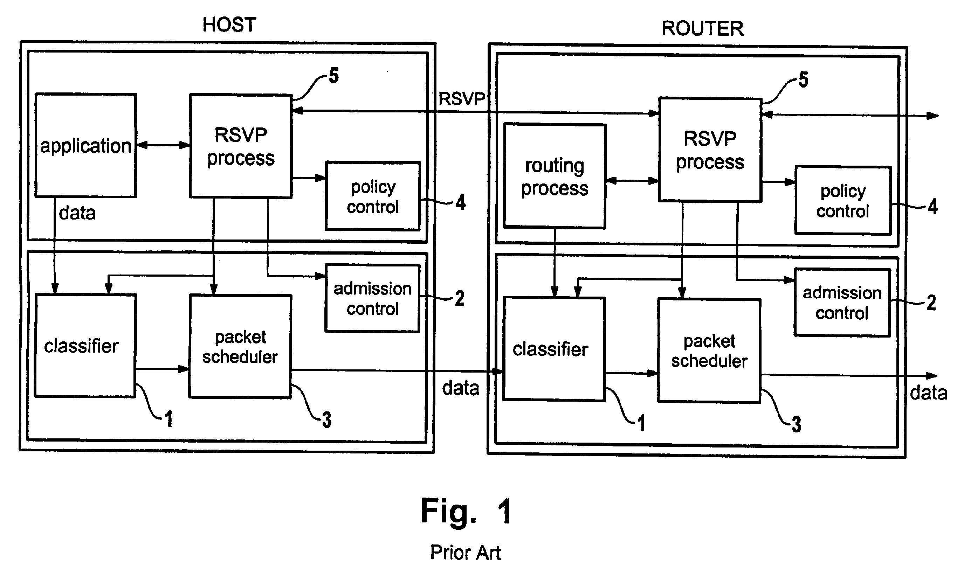

RSVP requests resources for simplex flows, i.e., it requests resources in only one direction. Therefore, RSVP treats a sender as logically distinct from a receiver, although the same application process may act as both a sender and a receiver at the same time. RSVP operates on top of IPv4 or IPv6, occupying the place of a transport protocol in the protocol stack. However, RSVP does not transport application data but is rather an Internet control protocol, like ICMP, IGMP, or routing protocols. Like the implementations of routing and management protocols, an implementation of RSVP will typically execute in the background, not in the data forwarding path, as shown in Figure 1.

Quality of service is implemented for a particular data flow by mechanisms collectively called "traffic control". These mechanisms include a packet classifier 1, admission control 2, and a "packet scheduler" 3 or some other ink-layer-dependent mechanism to determine when particular packets are forwarded. The "packet classifier" determines the QoS class (and perhaps the oute) for each packet. For each outgoing interface, the "packet scheduler" or other link-layer-dependent mechanism achieves the promised QoS. Traffic control implements QoS service models defined by the Integrated Services Working Group.

During reservation setup, an RSVP QoS request is passed to two local decision modules, admission control 2 and policy control 4. Admission control 2 determines whether the node has sufficient available resources to supply the requested QoS. Policy control 4 determines whether the user has administrative permission to make the reservation. If both checks succeed, parameters are set in the packet classifier 1 and in the link layer interface (e.g., in the packet scheduler 3) to obtain the desired QoS. If either check fails, the RSVP program 5 returns an error notification to the application process that originated the request.

RSVP protocol mechanisms provide a general facility for creating and maintaining distributed reservation state across a mesh of multicast or unicast delivery paths. RSVP itself transfers and manipulates QoS and policy control parameters as opaque data, passing them to the appropriate traffic control and policy control modules for interpretation. The structure and contents of the QoS parameters are documented in specifications developed by the Integrated Services Working Group.

Details of the RSVP are disclosed in the resource reservation protocol specification that is available from http://www.letf.org/rfc/rfc2205.txt and which is incorporated herein by reference in its entirety.

Recently so called active networks have been developed ("A management architecture for active networks", Active Middleware Services, 2002. Proceedings. Fourth Annual International Workshop , Barone, A.; Chirco, P., Di Fatta, G. ,Pages: 41 - 48; "Active network implementations", Research and Development, 2002. SCOReD 2002. , Hashim, H.; Manan, J.A.; Samad, M. pages: 371 - 374; "Towards an Active Network Architecture",D. L. Tennenhouse and D. J. Wetherall, Computer Communication Review, Vol. 26, No. 2, April 1996; "A Survey of Active Network Research" , David L. Tennenhouse, Jonathan M. Smith, W. David Sincoskie, David J. Wetherall, Gary J. Minden, IEEE Communications Magazine 1997; "Survey of Active Network Research", Dragos Niculescu, July 14, 1999 , http://paul.rutgers.edu/~dnicules/research/other/active_survey.pdf}

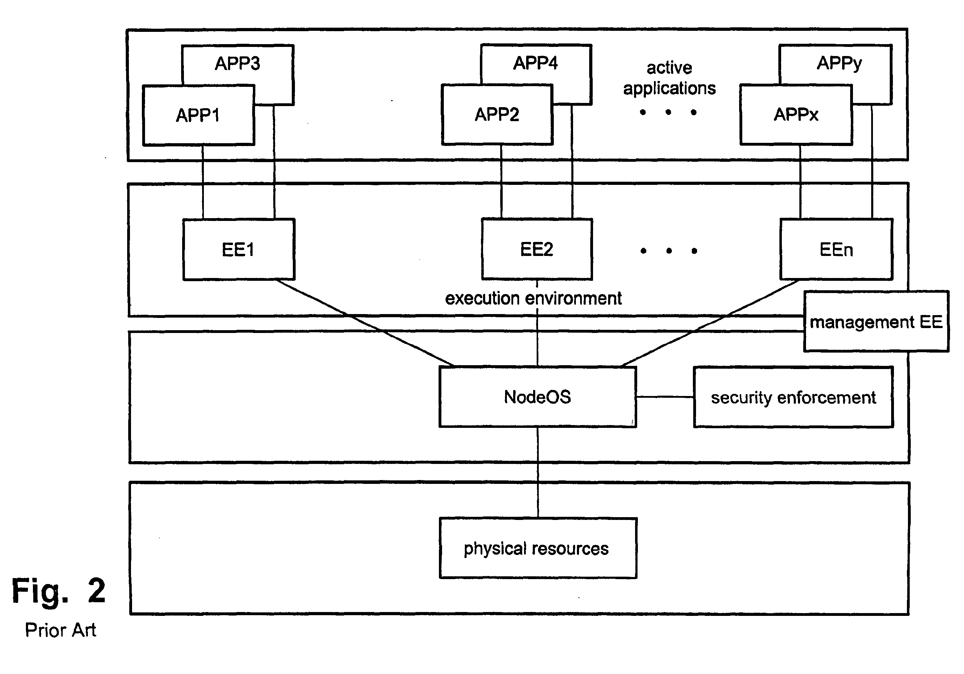

Figure 2 shows the general architecture and the major components of an active network node. Each active node runs a Node Operating System (NodeOS) and one or more Execution Environments (EEs). The Node OS is a layer operating between the EEs and the underlying physical resources which include the transmission bandwidth, processor cycles and storage. The NodeOS provides the EEs with the access to node resources while isolating the EEs from the details of resource management and the presence of other EEs. All requests made to the NodeOS are made on behalf of principals which represent other entities in the network including the users. Requests are made across communication channels that the NodeOS implements to enable EEs to send and received packets.

To maintain security in the network the NodeOS also implements a security policy database and enforcement engine. The NodeOS relies on the security enforcement engine to authenticate and authorize request before the principals are allowed to receive the requested services or perform the requested operations.

Each EE implements a virtual machine that interprets active packets that arrive at the node. Thus, an EE provides the interface through which end-to-end network services can be accessed. Fig. 2 shows how multiple EEs can be supported by a single active node. An EE may provide a simple service that can be statelessly controlled through user-provided parameters, or implement an interpreter for a powerful, stateful programming language, or something in between.

Users obtain services from the active network via Active Applications (AA) which program the programming interface present in the EE, to provide an end-to-end service. Thus, it is the AA that implements customized services for end-user applications. The code constituting the AA can be loaded into the relevant nodes of the network either in band by packets carrying the code, or the code can be installed out of band.

In the basic operation model, packets arrive at an active node, and the NodeOS proceeds to classify them according to the contents of their headers. The packets are then placed on an appropriate logical channel, each of which is associated with some protocol processing which may include security checks. Each channel delivers the packet either to an EE for processing before being forwarded to an output link, or directly to an output link.

European Patent Application EP 1001582 discloses a system for network transcoding of a multimedia data flow. The system comprises a service provider node having an active network deamon running on it. Users control an adaptive pipeline via the active network capability of the service provider node by sending coded instructions to the service provider node. The adaptive pipeline is constructed according to control parameters contained in the coded instruction.

The publication "ISDN3: the next generation networks" by Chan et al; 2001 IEEE Pacific RIM Conference on communications, Computers and Signal processing discloses a novel network architecture, which is to replace ISDN1 and ISDN2. The convergence of ATM, Internet and acive networks forms the basis of the next generation network ISDN. This document proposes a new type of communication packet called quantum packet, which shall replace existing passive and active packets. The quantum packet is specially designed to support emerging active network services. It consists of one or more quantum cells. Switchers and routers are integrated in a more generalized traffic forwarding device called forwarding engine.

So far usage of active networks is limited due to a lack of interoperability with legacy passive networks. There is therefore a need for a method and apparatus for coupling of passive and active networks.

### Summary of the invention

The present invention provides for a gateway for coupling of passive and active networks. The gateway can receive protocol messages from the passive network and active packets from the active network. The gateway translates a received passive network protocol message into an equivalent active packet for transmission via the active network. Further, the gateway translates a received active packet into an equivalent protocol message for transmission via the passive network.

The present invention is particularly advantageous as it enables to couple active and passive networks. This way a legacy passive network can be used together with an active network which greatly facilitates the introduction of active networks. In particular, interoperability between passive and active networks protects a company's investments into existing passive networks and allows to add active sub-networks in a step-by-step process.

In accordance with a preferred embodiment of the invention the passive and active networks that are coupled by the gateway are internet protocol (IP) type networks. Preferably the RSVP protocol is used by the passive network. The active network may implement any of the active network architecture approaches that have been considered so far.

In accordance with a further preferred embodiment of the invention the gateway is coupled to a translation repository. The translation repository has look-up tables for translation of passive network protocol messages to equivalent active packets and vice versa.

In still another aspect the invention relates to coupling of various types of active and passive networks. A data packet that is receive from a source network (i.e. a passive or active network) is translated into an equivalent data packet for a destination network (i.e. passive or active network).

It is to be noted that a 1-to-1 relationship between incoming data packets from the source network and outgoing data packets to the destination network is not essential. Rather there can be a m-to-n relationship, i. e. a number of m incoming data packets is translated into a number of n outgoing data packets, where m and n depend on the kind of translation required for the source to destination transformation of incoming data packets.

### Brief description of the drawings

In the following a preferred embodiment of the present invention is explained in greater detail by way of example only by making reference to the drawings in which:
- Figure 1: is a block diagram of a prior art RSVP architecture,
- Figure 2: is a block diagram of a prior art active network node,
- Figure 3: is a block diagram of a first embodiment of a gateway of the present invention,
- Figure 4: is a second preferred embodiment of a gateway of the invention,
- Figure 5: is a flow diagram illustrating the method performed by the gateway.

### Detailed description

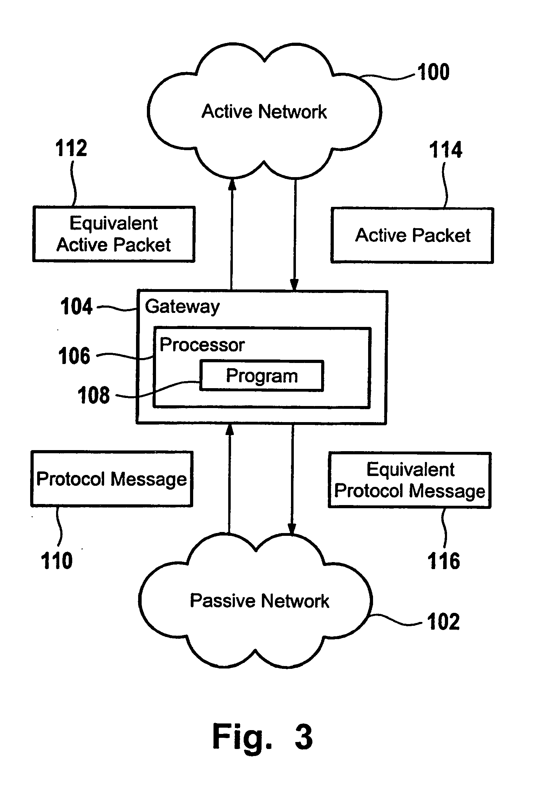

Figure 3 shows active network 100 that is coupled to passive network 102 by means of gateway 104. For example, passive network 102 uses the RSVP protocol (cf. figure 1) and active network 100 has network nodes corresponding to the architecture as shown in figure 2. Preferably active network 100 and passive network 102 are IP networks.

Gateway 104 has processor 106 for execution of computer program 108. Program 108 has instructions for translating of protocol messages of passive network 102 into equivalent active packets that can be processed by the active network nodes of active network 100. Further, program 108 has instructions for translating of active packets into equivalent protocol messages that can be processed by the legacy nodes of passive network 102.

In operation gateway 104 receives protocol message 110 from passive network 102. This invokes program 108 which translates protocol message 110 into an equivalent active packet 112. Program 108 determines executable code that corresponds to protocol message 110 and generates equivalent active packet 112 that carries the executable code for execution by the active network nodes of active network 100.

Likewise, when gateway 104 receives active packet 114 from active network 100 it translates the executable code contained in active packet 114 into an equivalent protocol message 116 that can be processed by the legacy nodes of passive networks 102.

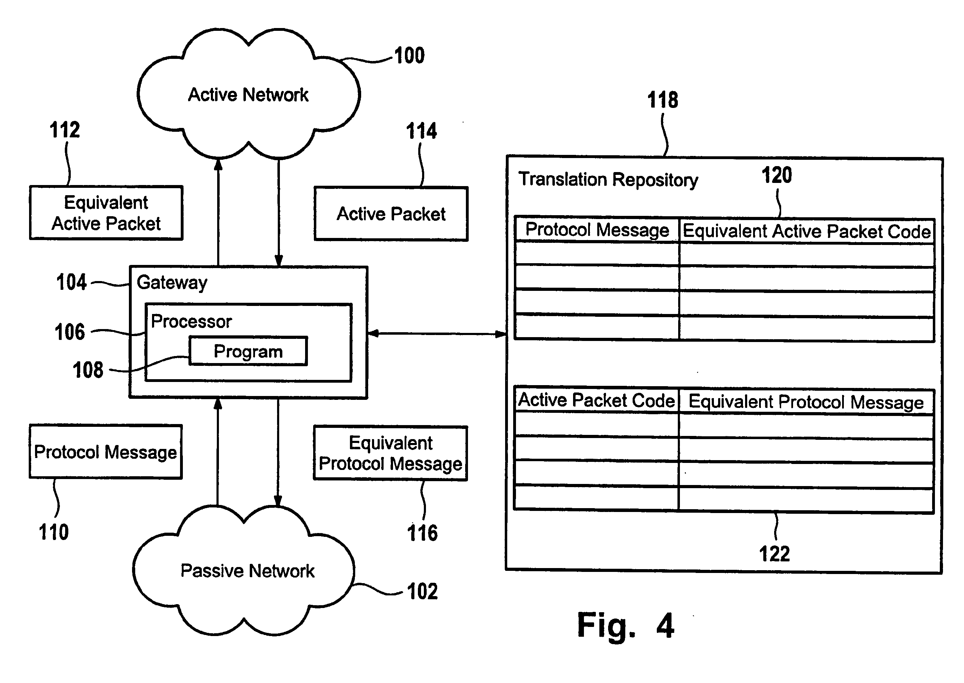

Figure 4 shows another embodiment. Elements of the embodiment of figure 4 that correspond to elements of figure 3 are designated by the same reference numerals.

In the embodiment considered in figure 4 gateway 104 is coupled to translation repository 118. Translation repository 118 has look-up tables 120 and 122. Look-up table 120 serves to look up the executable code that best corresponds to a given protocol message for generation of an equivalent active packet. Likewise look-up table 122 contains an equivalent protocol message that best corresponds to a given executable code received by means of an active packet.

When gateway 104 receives protocol message 110 it queries translation repository 118, i.e. look-up table 120, in order to determine the equivalent executable code that best corresponds to the received protocol message 110. On this basis program 108 generates equivalent active packet 112.

Likewise when gateway 104 receives active packet 114 it queries translation repository 118, i.e. look-up table 122, in order to determine an equivalent protocol message that best corresponds to the executable code received by means of active packet 114. Program 108 generates equivalent protocol message 116 on this basis.

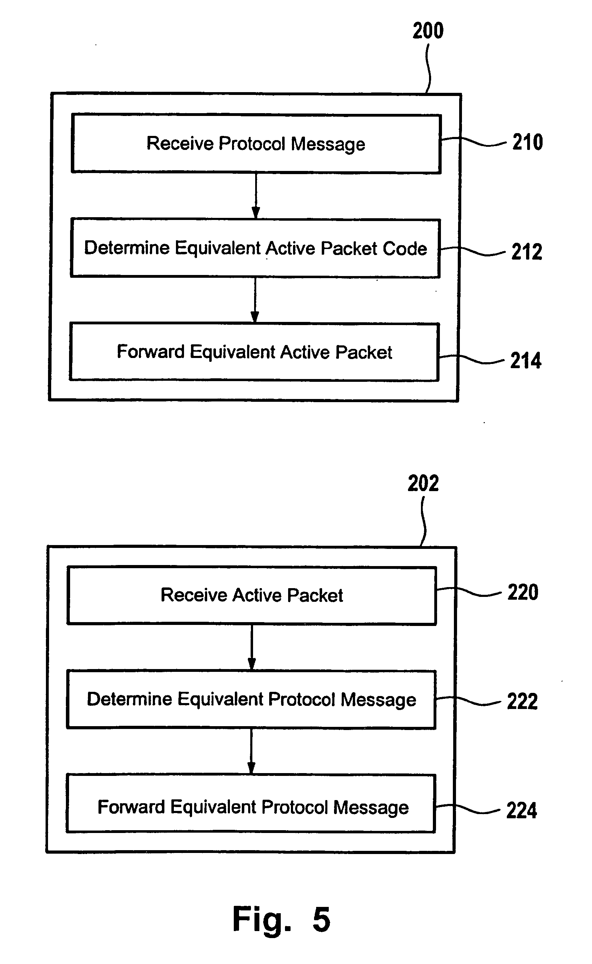

Figure 5 illustrates the methods performed by gateway 104 for coupling of the active and passive networks. Process 200 serves for transmission of legacy protocol messages via the active network whereas process 202 serves for transmission of active packets via a legacy passive network.

Process 200 has steps 210, 212, and 214 that are performed each time a protocol message is received (step 210). In step 212 equivalent executable code is determined that corresponds to protocol message received in step 210 and can be executed by the nodes of the active network. On this basis an equivalent active packet is generated and forwarded to the active network in step 214.

Process 202 has steps 220, 222 and 224. Performance of these steps is triggered each time an active packet is received by the gateway (step 220). In step 222 an equivalent protocol message that best corresponds to the executable code contained in the active packet is determined and an equivalent protocol message is generated on this basis. In step 224 the equivalent protocol message is forwarded to the passive network.

### List of Reference Numerals

- 100: Active Network
- 102: Passive Network
- 104: Gateway
- 106: Processor
- 108: Program
- 110: Protocol Message
- 112: Equivalent Active Packet
- 114: Active Packet
- 116: Equivalent Protocol Message
- 118: Translation Repository
- 120: Look-up Table
- 122: Look-up Table

## Claims

1. A gateway for coupling of a passive network (102) and an active network (100), the gateway **characterized by**:
- means (106, 108) for receiving a protocol message (110) from the passive network (102),
- means (106, 108) for receiving an active packet (114) from the active network (100),
- means (106, 108; 118, 120, 122) for translating a protocol message (110) into an equivalent active packet (112),
- means (114) for translating an active packet into an equivalent protocol message (116),
- means (106, 108) for forwarding the equivalent active packet to the active network (100),
- means (106, 108) for forwarding the equivalent protocol message to the passive network (102).

2. The gateway of claim 1, wherein the protocol message is a RSVP message.

3. The gateway of claim 1, wherein the active network (100) and the passive network (102) are IP networks.

4. The gateway of claim 1, further comprising a translation repository (118) for translation of active packets into equivalent protocol messages and for translation of protocol messages into equivalent active packets.

5. The gateway of claim 4, the translation repository comprising a look-up table (120, 122).

6. A network comprising at least one passive network (102), at least one active network (100), and **characterized by** at least one gateway according to claim 1 for coupling of the at least one active and passive networks, (100, 102).

7. The network of claim 6, the gateway further comprising a translation repository.

8. A method for transmitting of a passive network protocol message via an active network, the method comprising the steps of:
- receiving the passive network protocol message by a gateway of the active network (100),
- translating the passive network protocol message into an equivalent active packet.
- transmitting the equivalent active packet via the active network (100).

9. A method for transmitting of an active packet via a passive network (100), the method comprising the steps of:
- receiving the active packet by a gateway of the passive network (102),
- translating the active packet into an equivalent passive network protocol message,
- transmitting the equivalent passive network protocol message via the passive network (102).

10. A computer program product for execution by a gateway, the computer program product comprising instructions for translating of a passive network protocol message into an equivalent active packet and for translating of an active packet into an equivalent passive network protocol message according to the methods of claim 8 and 9 respectively.

## Patentansprüche

1. Gateway zur Kopplung eines passiven Netzwerks (102) und eines aktiven Netzwerks (100), wobei der Gateway durch folgendes **gekennzeichnet** ist:
- Mittel (106, 108) zum Empfang einer Protokoll-Nachricht (110) vom passiven Netzwerk (102),
- Mittel (106, 108) zum Empfang eines aktiven Paketes (114) vom aktiven Netzwerk (100),
- Mittel (106, 108; 118, 120, 122) zur Umsetzung einer Protokoll-Nachricht (110) in ein äquivalentes aktives Paket (112),
- Mittel (114) zur Umsetzung eines aktiven Paketes in eine äquivalente Protokoll-Nachricht (116),
- Mittel (106, 108) zur Weiterleitung des äquivalenten aktiven Paketes an ein aktives Netzwerk (100),
- Mittel (106, 108) zur Weiterleitung der äquivalenten Protokoll-Nachricht an das passive Netzwerk (102).

2. Der Gateway gemäß Anspruch 1, wobei die Protokoll-Nachricht eine RSVP-Nachricht ist.

3. Der Gateway gemäß Anspruch 1, wobei das aktive Netzwerk (100) und das passive Netzwerk (102) IP-Netzwerke sind.

4. Der Gateway gemäß Anspruch 1, der weiterhin einen Umsetzungs-Speicher (118) zur Umsetzung aktiver Pakete in äquivalente Protokoll-Nachrichten und zur Umsetzung von Protokoll-Nachrichten in äquivalente aktive Pakete enthält.

5. Der Gateway gemäß Anspruch 4, wobei der Umsetzungs-Speicher eine Nachschlagetabelle (120, 122) enthält.

6. Ein Netzwerk, das mindestens ein passives Netzwerk (102), mindestens ein aktives Netzwerk (100) enthält und durch mindestens einen Gateway gemäß Anspruch 1 zur Kopplung des mindestens einen aktiven und passiven Netzwerks (100, 102) **gekennzeichnet** ist.

7. Das Netzwerk gemäß Anspruch 6, wobei der Gateway weiterhin einen Umsetzungs-Speicher enthält.

8. Ein Verfahren zum Senden einer passiven Netzwerk-Protokoll-Nachricht über ein aktives Netzwerk, wobei das Verfahren folgende Schritte umfasst:
- Empfang der Protokoll-Nachricht des passiven Netzwerks durch einen Gateway des aktiven Netzwerks (100),
- Umsetzung der Protokoll-Nachricht des passiven Netzwerks in ein äquivalentes aktives Paket,
- Senden des äquivalenten aktiven Paketes über das aktive Netzwerk (100).

9. Ein Verfahren zum Senden eines aktiven Paketes über ein passives Netzwerk (102), wobei das Verfahren folgende Schritte umfasst:
- Empfang des aktiven Paketes durch einen Gateway des passiven Netzwerks (102),
- Umsetzung des aktiven Paketes in eine äquivalente Protokoll-Nachricht des passiven Netzwerks,
- Senden der äquivalenten Protokoll-Nachricht des passiven Netzwerks über das passive Netzwerk (102).

10. Ein Computer-Programmprodukt zur Ausführung durch einen Gateway, wobei das Computer-Programmprodukt Instruktionen zur Umsetzung einer Protokoll-Nachricht eines passiven Netzwerks in ein äquivalentes aktives Paket und zur Umsetzung eines aktiven Paketes in eine äquivalente Protokoll-Nachricht des passiven Netzwerks gemäß den Verfahren aus Anspruch 8, bzw. 9 enthält.

## Revendications

1. Passerelle destinée à coupler un réseau passif (102) et un réseau actif (100), la passerelle étant **caractérisée par** :
- un moyen (106, 108) pour recevoir un message de protocole (110) en provenance du réseau passif (102),
- un moyen (106, 108) pour recevoir un paquet actif (114) en provenance du réseau actif (100),
- un moyen (106, 108 ; 118, 120, 122) pour traduire un message de protocole (110) en un paquet actif équivalent (112),
- un moyen (114) pour traduire un paquet actif en un message de protocole équivalent (116),
- un moyen (106, 108) pour expédier le paquet actif équivalent vers le réseau actif (100)
- un moyen (106, 108) pour expédier le message de protocole équivalent vers le réseau passif (102).

2. Passerelle selon la revendication 1, dans laquelle le message de protocole est un message de protocole RSVP.

3. Passerelle selon la revendication 1, dans laquelle le réseau actif (100) et le réseau passif (102) sont des réseaux IP.

4. Passerelle selon la revendication 1, comprenant en outre un répertoire central de traduction (118) destiné à la traduction de paquets actifs en des messages de protocole équivalents et à la traduction de messages de protocole en des paquets actifs équivalents.

5. Passerelle selon la revendication 4, le répertoire central de traduction comprenant une table de correspondance (120, 122).

6. Réseau comprenant au moins un réseau passif (102), au moins un réseau actif (100), et **caractérisé par** au moins une passerelle selon la revendication 1 destinée à coupler les au moins un réseau actif et réseau passif (100, 102).

7. Réseau selon la revendication 6, la passerelle comprenant en outre un répertoire central de traduction.

8. Procédé de transmission d'un message de protocole de réseau passif par le biais d'un réseau actif, le procédé comprenant les étapes consistant à :
- recevoir le message de protocole de réseau passif par une passerelle du réseau actif (100)
- traduire le message de protocole de réseau passif en un paquet actif équivalent.
- transmettre le paquet actif équivalent par le biais du réseau actif (100).

9. Procédé de transmission d'un paquet actif par le biais d'un réseau passif (100), le procédé comprenant les étapes consistant à :
- recevoir le paquet actif par une passerelle des réseaux passifs (102)
- traduire le paquet actif en un message de protocole équivalent de réseau passif,
- transmettre le message de protocole équivalent du réseau passif par le biais du réseau passif.

10. Produit de programme informatique destiné à être exécuté par une passerelle, le produit de programme informatique comprenant des instructions pour traduire un message de protocole de réseau passif en un paquet actif équivalent et pour traduire un paquet actif en un message de protocole équivalent de réseau passif conformément au procédé selon respectivement les revendications 8 et 9.
